# DEMANDE DE BREVET EUROPEEN

(11) **EP 1 122 150 A1**
(43) Date de publication de la demande: **08.08.2001**
(21) Numéro de dépôt: 01400263.8
(22) Date de dépôt: 02.02.2001
(51) Int. Cl.: B62D 6/00, B62D 5/04, B62D 5/12

(54) **Dispositif de servodirection de véhicule automobile**

(30) Priorité: 04.02.2000 FR 0001417
(71) Demandeur: Renault V.I., 69003 Lyon (FR)
(72) Inventeur: Bechart, Hubert, 69003 Lyon (FR); Dayre, Eric, 38540 Saint Just Chaleyssin (FR); Dumetz, Patrice, 59242 Templeuve (FR)
(74) Mandataire: Srour, Elie

(57) **Abrégé**

Il comprend a) un organe (1) de commande manuelle d'un générateur (2) d'une valeur de consigne pour l'angle de braquage, b) des moyens de braquage des roues (4, 4'), et c) des moyens de régulation (3) sensibles à la valeur de consigne pour commander les moyens de braquage de manière que les angles de braquage réels des roues (4,4') soient liés à la valeur de consigne. Les moyens de braquage sont constitués par des premier (7) et deuxième (7') actionneurs agissant sur les angles de braquage (α, α') desdites roues gauche et droite, respectivement, de l'essieu, les actionneurs (7,7') étant commandés indépendamment l'un de l'autre par les moyens de régulation (3).

## Description

La présente invention est relative à un dispositif de servodirection de véhicule automobile, pour commander l'angle de braquage des roues gauche et droite d'au moins un essieu directeur dudit véhicule et, plus particulièrement, à un tel dispositif comprenant a) un organe de commande manuelle d'un générateur d'une valeur de consigne pour ledit angle de braquage, b) des moyens de braquage desdites roues, et c) des moyens de régulation sensibles à ladite valeur de consigne pour commander lesdits moyens de braquage de manière que les angles de braquage réels des roues soient liés à ladite valeur de consigne.

On connaît de tels dispositifs notamment de FR-A-2 744 089 et FR-A-2 745 256. Comme représenté à la figure 1 du dessin annexé, ceux-ci comprennent un volant constituant un organe de commande manuelle d'un générateur 2 d'une valeur de consigne pour l'angle de braquage des roues du véhicule. Cette valeur est déterminée par le conducteur du véhicule, qui fait tourner le volant 1. Le générateur 2 peut être constitué par un capteur de position, de tout type connu, propre à former un signal représentatif de la position angulaire du volant.

Ce signal est fourni à un régulateur 3 qui tire de ce signal une valeur de consigne α_{c} de l'angle de braquage demandé par le conducteur. Le régulateur reçoit également un signal représentatif de l'angle de braquage réel des roues gauche et droite 4,4' respectivement, d'un essieu directeur de véhicule automobile. Le régulateur 3 compare les valeurs réelle et de consigne de l'angle de braquage et commande un mécanisme d'actionnement agissant sur l'orientation des roues 4,4' de manière que l'angle de braquage réel de ces roues coïncide avec l'angle de consigne α_{c} demandé par le conducteur du véhicule.

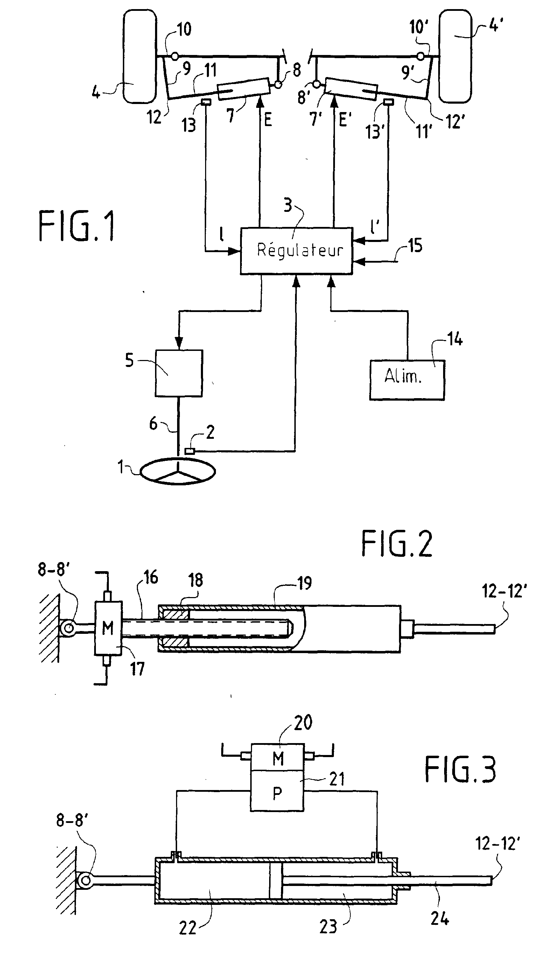

Le régulateur 3 commande aussi, selon FR-A-2 745 256, un variateur d'effort 5 agissant sur l'arbre 6 du volant 1 pour que le conducteur retrouve, sur ce volant, les forces de frottement et de rappel qu'il éprouve lorsqu'il manoeuvre le volant d'un dispositif de direction classique, ces forces ne "remontant" plus sur le volant du dispositif de la figure 1, mécaniquement découplé des roues 4,4' et des moyens utilisés pour les manoeuvrer.

Les dispositifs de servodirection du type décrit ci-dessus présentent de nombreux avantages et leur avenir est donc prometteur : suppression de la colonne de direction, source de blessures graves en cas d'accident, élimination des remontées de vibrations dans cette colonne, diminution possible du diamètre du volant pour les véhicules poids lourds, les autocars et les autobus, avec pour conséquence une amélioration du confort de conduite, possibilité de variation du rapport de démultiplication angle volant/angle de braquage, possibilité de superposition de corrections automatiques du braquage demandé par le conducteur, etc., etc.

Les dispositifs décrits dans les brevets précités présentent cependant des inconvénients. C'est ainsi que le dispositif de servodirection à moteur électrique et crémaillère de FR-A-2 745 256 peut difficilement délivrer un couple suffisant, notamment sur un véhicule poids lourd, sauf à utiliser un moteur électrique très encombrant. Celui décrit dans FR-A-2 744 089 comprend, en parallèle avec un tel mécanisme à moteur électrique et crémaillère, un servomoteur hydraulique comprenant un vérin, des vannes et un réservoir de liquide hydraulique, raccordés par des conduits. Un tel dispositif, complexe, est d'installation et d'entretien coûteux, du fait des purges et remplissages qu'il implique, et de fiabilité douteuse du fait des fuites toujours possibles. En outre, dans le cas du dispositif décrit dans FR-A-2 745 256 comme dans celui décrit FR-A-2 744 089, une crémaillère couple les déplacements angulaires des roues gauche et droite de l'essieu directeur commandé, cette crémaillère encombrant l'espace situé entre ces deux roues.

La présente invention a donc pour but de réaliser un dispositif de servodirection du type décrit en préambule de la présente description, qui ne présente pas les inconvénients mentionnés ci-dessus des dispositifs de la technique antérieure.

On atteint ce but de l'invention, ainsi que d'autres qui apparaîtront dans la suite de la présente description, avec un dispositif de servodirection de véhicule automobile, pour commander l'angle de braquage des roues gauche et droite d'au moins un essieu directeur dudit véhicule, ce dispositif comprenant a) un organe de commande manuelle d'un générateur de valeur de consigne pour ledit angle de braquage, b) des moyens de braquage desdites roues, et c) des moyens de régulation sensibles à ladite valeur de consigne pour commander lesdits moyens de braquage de manière que les angles de braquage réels des roues soient liés à ladite valeur de consigne, ce dispositif étant remarquable en ce que lesdits moyens de braquage sont constitués par des premier et deuxième actionneurs agissant sur les angles de braquage desdites roues gauche et droite respectivement, dudit essieu, lesdits actionneurs étant commandés indépendamment l'un de l'autre par lesdits moyens de régulation.

Comme on le verra plus loin, l'affectation d'un actionneur particulier à chacune des roues de l'essieu permet de supprimer tout couplage mécanique entre les deux roues, et donc de libérer une partie de l'espace qui les sépare au profit du moteur du véhicule, par exemple. Le pilotage séparé des angles de braquage des deux roues permet, par ailleurs, de respecter parfaitement l'épure de Jeantaud, ce qui améliore la tenue de route du véhicule dans les virages tout en diminuant l'usure des pneumatiques de ce véhicule, avec pour conséquence l'allongement de leur durée de vie utile.

D'autres caractéristiques et avantages du dispositif selon la présente invention apparaîtront à la lecture de la description qui va suivre et à l'examen du dessin annexé dans lequel :
- la figure 1 est une représentation schématique du dispositif de servodirection suivant l'invention, déjà partiellement décrit en préambule de la présente description, et
- les figures 2 et 3 sont des représentations schématiques d'actionneurs préférés, pour l'équipement du dispositif de la figure 1.

On se réfère à la figure 1 du dessin annexé où il apparaît que le dispositif de servodirection des roues 4,4' d'un essieu directeur d'un véhicule automobile comprend, outre les organes ou appareils 1,2,3,5 et 6 décrits en préambule de la présente description, des premier et deuxième actionneurs 7,7' agissant, suivant l'invention, sur l'angle de braquage des roues 4,4' respectivement. Comme cela apparaît aussi sur la figure 1, chacun de ces actionneurs 7,7' prend la forme d'un vérin monté sur l'essieu de roues lui-même, entre un point d'articulation fixe 8,8' sur cet essieu, respectivement, et un bras 9,9' de manoeuvre d'une fusée 10,10' sur laquelle est montée la roue 4,4' respectivement. Les bras 9,9' sont reliés aux tiges 11,11' des vérins 7,7' respectivement, par des liaison rigides 12,12' respectivement. Ainsi, les élongations des tiges 11,11' des vérins 7,7' fixent les angles de braquage des roues 4,4' respectivement.

Des capteurs de position 13,13' sensibles à l'élongation des tiges des vérins 7,7' respectivement, fournissent au régulateur 3 des signaux 1,1' représentatifs de ces élongations. Le régulateur assure l'asservissement de ces élongations à des valeurs de consigne l_{c}, l'_{c} correspondant aux angles de braquage α,α' recherchés pour les roues 4,4'.

Suivant la présente invention, comme on le verra plus loin, ces angles de braquage α, α' peuvent être égaux à l'angle de consigne α_{c} demandé par le conducteur, ou différents de cet angle de consigne.

L'asservissement est assuré par une commande appropriée de l'énergie E,E' délivrée aux vérins 7,7' pour manoeuvrer les tiges 11,11' respectivement, cette énergie étant prélevée sur une source d'énergie 14 embarquée dans le véhicule.

Le régulateur est dûment programmé pour procéder aux calculs nécessaires à l'évaluation de ces quantités d'énergie E,E' ainsi qu'à la formation du signal de commande du variateur d'effort 5 agissant sur l'arbre 6 du volant, comme on l'a vu plus haut en préambule de la présente description. Il peut utiliser pour ce faire divers paramètres représentatifs de l'état du véhicule ou de son environnement, tels que la vitesse du véhicule, la charge de ce véhicule, le couple exercé par le conducteur sur le volant, la force du vent latéral, etc., ces paramètres étant connus du régulateur grâce à des capteurs appropriés, symbolisés globalement par la ligne 15 sur la figure 1.

Suivant un mode de réalisation préféré de l'invention, la source d'énergie 14 utilisée pour alimenter les actionneurs est une source d'énergie électrique telle qu'un alternateur entraîné par le moteur thermique du véhicule, assisté par une batterie en cas d'arrêt du moteur ou de défaillance de l'alternateur. L'élongation des tiges des vérins est donc commandée à l'aide d'une énergie tirée de cette source.

On a représenté schématiquement aux figures 2 et 3 des vérins utilisables dans le dispositif suivant l'invention. Le vérin de la figure 2 comprend une vis 16 mise en rotation autour de son axe par un moteur électrique 17 commandé par le régulateur 3. La rotation de la vis 16 commande la translation sur la vis d'un écrou 18 solidaire d'un manchon 19 constituant la "tige" du vérin, des moyens (non représentés) empêchant alors la mise en rotation du manchon par la vis.

Le vérin de la figure 3 est électro-hydraulique et comprend un moteur 20 d'entraînement d'une pompe 21 propre à faire circuler, dans un sens ou dans l'autre, un liquide hydraulique entre les deux chambres 22 et 23 du vérin proprement dit, de manière à faire varier l'élongation de la tige 24 du vérin.

Il apparaît maintenant que, dans sa structure comme dans son fonctionnement, le dispositif de servodirection suivant l'invention décrit ci-dessus permet bien d'obtenir les avantages annoncés. C'est ainsi que :
- l'association d'un actionneur de braquage à chaque roue dégage un espace libre entre ceux-ci, autour de l'axe longitudinal du véhicule. Cet espace peut être occupé par au moins une partie du moteur du véhicule, dont le centre de gravité se trouve ainsi avantageusement abaissé.
- le pilotage séparé des angles de braquage α,α' des roues 4, 4' respectivement par le régulateur 3 permet de respecter parfaitement l'épure de Jeantaud. On sait que cette épure établit que les angles de braquage des deux roues d'un même essieu directeur doivent être légèrement différents pour assurer la convergence des axes des roues sur le centre de rotation du véhicule, quand celui-ci circule dans des virages. Le régulateur 3 du dispositif suivant l'invention peut être dûment programmé pour, dans une telle situation, régler les angles α et α' à des valeurs différentes choisies pour respecter parfaitement la condition explicitée ci-dessus. La tenue de route du véhicule en est améliorée et la durée de vie des pneumatiques de ce véhicule accrue.
- le montage des actionneurs sur l'essieu lui-même supprime le braquage induit par des variations du débattement entre la masse suspendue et la masse non suspendue, au niveau de chaque roue.
- l'indépendance des angles de braquage des deux roues permet d'adapter ces angles à des conditions de roulement différentes pour les deux roues, ou à des stratégies particulières de freinage du véhicule, de circulation en virage du véhicule, ou encore de renforcement de la stabilité du véhicule en présence d'un coup de vent latéral, par exemple.
- la présence de deux actionneurs permet de conserver au véhicule une certaine directibilité en cas de panne de l'un d'eux.

Bien entendu, l'invention n'est pas limitée au mode de réalisation décrit et représenté qui n'a été donné qu'à titre d'exemple. C'est ainsi que l'invention trouve évidemment application à un véhicule comptant plus d'un essieu directeur, ou à une remorque de véhicule poids lourd par exemple, comportant un tel essieu directeur.

## Revendications

1. Dispositif de servodirection de véhicule automobile, pour commander l'angle de braquage des roues gauche et droite (4,4') d'au moins un essieu de direction dudit véhicule, comprenant :
a) un organe (1) de commande manuelle d'un générateur (2) d'une valeur de consigne pour ledit angle de braquage,
b) des moyens de braquage desdites roues, et
c) des moyens de régulation (3) sensible à ladite valeur de consigne pour commander lesdits moyens de braquage de manière que les angles de braquage réels des roues (4,4') soient liés à ladite valeur de consigne,
caractérisé en ce que lesdits moyens de braquage sont constitués par des premier (7) et deuxième (7') actionneurs agissant sur les angles de braquage desdites roues gauche et droite respectivement, dudit essieu, lesdits actionneurs (7,7') étant commandés indépendamment l'un de l'autre par lesdits moyens de régulation (3).

2. Dispositif conforme à la revendication 1, caractérisé en ce que lesdits actionneurs sont des vérins électriques à vis (16 à 19).

3. Dispositif conforme à la revendication 1, caractérisé en ce que lesdits actionneurs sont des vérins électro-hydrauliques (20 à 24).

4. Dispositif conforme à l'une quelconque des revendications 1 à 3, caractérisé en ce que lesdits moyens de régulation (3) comprennent des moyens pour commander les angles de braquage (α,α') desdites roues dans le respect de l'épure de Jeantaud.

5. Dispositif conforme à l'une quelconque des revendications 1 à 4, caractérisé en ce que lesdits moyens de régulation sont sensibles à au moins une stratégie du groupe formé par : une stratégie de freinage du véhicule, une stratégie de commande de trajectoire en virage, une stratégie de renforcement de la stabilité du véhicule, dans le calcul desdits angles de braquage (α,α') desdites roues (4,4').
